# EUROPEAN PATENT APPLICATION

(11) **EP 3 181 757 A1**
(43) Date of publication of application: **21.06.2017**
(21) Application number: 16750080.0
(22) Date of filing: 07.07.2016
(51) Int. Cl.: E01F 9/30, G08G 1/00

(54) **ROAD WARNING METHOD AND DEVICE**

(30) Priority: 21.10.2015 CN 201510694774
(71) Applicant: LE Holdings (Beijing) Co., Ltd., Beijing 100025 (CN); Leauto Intelligent Technology (BEIJING) Co. Ltd, Beijing 100025 (CN)
(72) Inventor: LI, Wenrui, Beijing 100025 (CN); CHEN, Kunsheng, Beijing 100025 (CN); XU, Yong, Beijing 100025 (CN); LIN, Wei, Beijing 100025 (CN); LIU, Peng, Beijing 100025 (CN)
(74) Representative: Manitz Finsterwald Patentanwälte PartmbB
(86) International application number: PCT/CN2016/089099
(87) International publication number: WO 2017/067235

(57) **Abstract**

The embodiments of the present disclosure provide road warning method and device. The device includes: a screen; a receiving module, configured to receive warning contents and transmit the warning contents to a displaying module and a data processing module; a positioning module, configured to acquire position information of the screen and transmit the position information to the data processing module; a displaying module, configured to display the warning contents on the screen; a data processing module, configured to organize the warning contents and the position information into warning information and transmit the warning information to a transmitting module; and a transmitting module, configured to transmit the warning information to objective vehicles within a predefined distance range, wherein the objective vehicles include vehicles supporting V2X communication. The present disclosure can achieve effects of long communication distance, excellent warning effect and editable warning contents, effectively ensuring traffic safety.

## Description

### TECHNICAL FIELD

The embodiments of the present invention relate to the field of transportation safety technologies and in particular to a road warning method and a road warning device.

### BACKGROUND

With a development of road industry and an increase of an amount of vehicles, quality of roads in use becomes gradually deteriorated due to friction and impact of wheels, erosion and weathering of natural forces (such as, rainstorm, flood, sandstorm, ice-snow, solarisation and ice-melting), human destruction and deficiencies left at the time of building. Therefore, in order to maintain performance of the roads and keep driving safe, comfortable and unimpeded, road maintenance has become a common task. During the road maintenance, a road maintenance warning is usually needed to remind passing vehicles to instantly slow down or changing lane.

In current road maintenance warning manner, mostly, a warning board is erected, wherein the warning board usually has black letters on yellow or white letters on blue and coated with reflective material to catch the driver's attention to achieve the purpose of warning. However, the warning board in the prior art has problems that it easily topples over, degraded low visibility in rain and snow and is shielded by vehicles ahead. Therefore, the driver cannot be warned in advance, resulting in traffic accidents and causing irreparable damages.

### SUMMARY

The embodiments of the present disclosure provide road warning method and device, to overcome shortages in the prior art that the warning distance of road warning board is short and easily influenced by environment and to achieve effects of long communication distance, excellent warning effect and editable warning contents, effectively ensuring traffic safety.

According to an aspect of the present disclosure, the embodiments of the present disclosure provide a road warning device which includes:
a screen;
a receiving module, configured to receive warning contents and transmit the warning contents to a displaying module and a data processing module;
a positioning module, configured to acquire position information of the screen and transmit the position information to the data processing module;
a displaying module, configured to display the warning contents on the screen;
a data processing module, configured to organize the warning contents and the position information into warning information and transmit the warning information to a transmitting module; and
a transmitting module, configured to transmit the warning information to objective vehicles within a predefined distance range, wherein the objective vehicles include vehicles supporting V2X communication.

According to another aspect of the present disclosure, the embodiments of the present disclosure also provide a road warning method which includes steps of:
receiving warning contents;
displaying the warning contents on a preset screen;
acquiring position information of the screen;
organizing the warning contents and the position information into warning information; and
transmitting the warning information to objective vehicles within a predefined distance range, wherein the objective vehicles include vehicles supporting V2X communication.

According to still another aspect of the present disclosure, a computer program is provided, including a computer readable code, wherein the computer readable code is executed on a road warning device, cause the road warning device to perform the road warning method above.

According to yet another further aspect of the present disclosure, a computer readable medium is provided, wherein the computer readable program is stored in the computer readable medium.

The present disclosure has the following beneficial effects:
The road warning method and device according to the embodiments of the present disclosure may receive the warning contents by the receiving module, acquire the position information of the screen by the positioning module, and organized the warning contents and the position information into the warning information by the data processing module. On one hand, the displaying module displays the warning contents on the screen; on the other hand, the transmitting module transmits the warning information to the objective vehicles supporting V2X communication within the predefined distance range. In two ways, it is possible to overcome shortages in the prior art that the warning distance in road construction is short and easily influenced by environment, so as to achieve effects of long communication distance, excellent warning effect and editable warning contents, effectively ensuring traffic safety.

The foregoing illustration is only an overview of a technical solution of the present disclosure. A technical means of the present disclosure can be more fully practiced in accordance with the description; and the above and other objects, features and advantages of the present invention will be more clearly understood from the following detailed description.

### BRIEF DESCRIPTION OF THE DRAWINGS

In order to more apparently describe the technical schemes in the embodiments of the present disclosure or in the prior art, accompanying figures necessarily used in the description of the embodiments or the prior art will be simply explained hereinafter. Obviously, the accompanying figures described below will form the embodiments of the present disclosure. An ordinary person skilled in the art may conceive further figures in accordance with these accompanying figures without contributing creative labor.
FIG. 1 is a block diagram showing a road warning device according to an embodiment of the present disclosure;
FIG. 2 is a block diagram showing a road warning device according to another embodiment of the present disclosure; and
FIG. 3 is a flow chart showing an example of a road warning method according to an embodiment of the present disclosure.
FIG. 4 schematically illustrates a block diagram of a road warning device used to execute the method according to the present disclosure; and
FIG. 5 schematically illustrates a storage cell used to keep or carry a program code for realizing the method according to the present disclosure.

### DETAILED DESCRIPTION

In order that objectives, technical schemes and advantages of the embodiments of the present disclosure become more apparent, the technical schemes in the embodiments of the present disclosure will be thoroughly and completely described below in conjunction with the accompanying figures in the embodiments of the present disclosure. It is obvious that the embodiments described herein are some of embodiments of the present disclosure rather than entire embodiments. On the basis of the embodiments of the present disclosure, other embodiments conceived by an ordinary person skilled in the art without creative labor would all fall into the scope of the present invention.

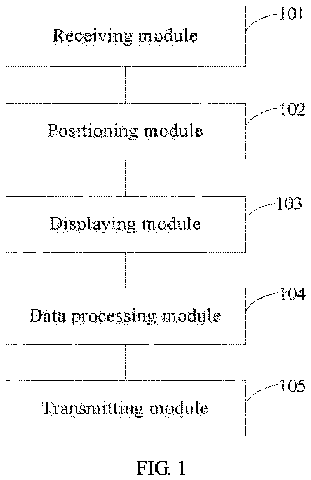

With reference to FIG. 1, it shows a block diagram of a road warning device according to an embodiment of the present disclosure. The device may particularly comprise following modules:
a screen (not shown);
a receiving module 101, configured to receive warning contents and transmit the warning contents to a displaying module and a data processing module;
a positioning module 102, configured to acquire position information of the screen and transmit the position information to the data processing module;
a displaying module 103, configured to display the warning contents on the screen;
a data processing module 104, configured to organize the warning contents and the position information into warning information and transmit the warning information to a transmitting module;
a transmitting module 105, configured to transmit the warning information to objective vehicles within a predefined distance range.

The objective vehicles may receive and display the warning information.

Herein, the objective vehicles may include vehicles supporting vehicle-to-infrastructural facilities (V2X, Vehicle to X) communication, which means the objective vehicles can support V2X communication.

In the embodiment of the present disclosure, the receiving module receives the warning contents, the positioning module acquires the position information of the screen, and the data processing module organizes the warning contents and the position information into warning information. On one hand, the displaying module displays the warning contents on the screen; on the other hand, the transmitting module transmits the warning information to the objective vehicles supporting V2X communication within the predefined distance range such that the objective vehicles receive and display the warning information. In two ways, it is possible to overcome shortages in the prior art that the warning distance in road construction is short and easily influenced by environment, so as to achieve effects of long communication distance, excellent warning effect and editable warning contents, effectively ensuring traffic safety.

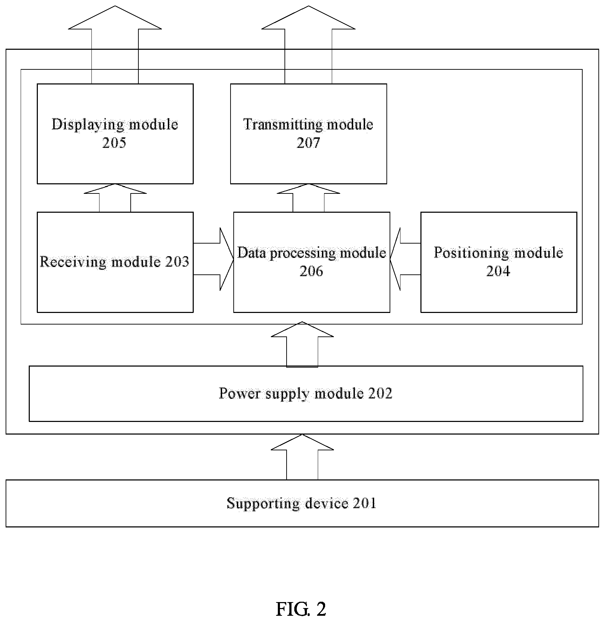

With reference to FIG. 2, it shows a road warning device according to an embodiment of the present disclosure. The road warning device may include a screen (not shown) and a supporting device 201 for supporting the screen.

In an embodied implementation, the screen may be an LED screen. The LED screen can include touch screen or non-touch screen.

The supporting device 201 is configured to support and fix the screen. The supporting device 201 may be similar to a traditional supporting device for a road safety warning board and substantially include a base, a supporting rod, a pulley and a connector(s).

Besides, the road warning device may at least further include following modules: a power supply module 202, a receiving module 203, a positioning module 204, a displaying module 205, a data processing module 206 and a transmitting module 207, which can be built in the supporting device 201, wherein

the power supply module 202 is configured to supply electric power to the road warning device.

In particular, the power supply module 202 can be used to provide the receiving module 203, the positioning module 204, the displaying module 205, the data processing module 206 and the transmitting module 207 with necessary electric energy for operation.

The power supply module 202 may include but not be limited to a rechargeable battery, a DC/AC device, wires, a switch, a plug and a transformer.

The receiving module 203 is configured to receive warning contents and transmit the warning contents to the displaying module 205 and the data processing module 206.

In an embodied implementation, warning contents may be input to the receiving module 203 in many manners, including but not limited to following three conditions.

In preferred one of the embodiments of the present disclosure, the road warning device may further include input equipment which is connectable to the screen. The receiving module 203 may further include a following sub-module:

a first receiving sub-module, configured to receive warning contents input by the user through the input equipment and transmit the warning contents to the displaying module and the data processing module.

In an embodied implementation, the input equipment may include input equipments such as mouse and keyboard. The input equipments such as mouse and keyboard may be connected to the screen via data cables.

In particular, the receiving module 203 may be embodied as an input interface in the screen. The user could input warning contents on the input interface through the mouse or keyboard and the first receiving sub-module can receive the warning contents input by the user.

In the application of the embodiment of the present disclosure, the user may include but not be limited to road maintenance personnel, transport management personnel or vehicle owner.

The warning contents may be contents input by the user according to specific road condition or construction condition for reminding other vehicle owners to notice road condition or change lane. For example, they could be "Tunnel is being constructed, please make a left/right/U turn", "Expressway is being constructed, please change lane to left/right to make a detour, and the like.

In another preferred one of the embodiments of the present disclosure, when the screen is a touch screen, the receiving module 203 may further include a following sub-module:
a second receiving sub-module, configured to receive warning contents input by the user via the touch screen and transmit the warning contents to the displaying module and the data processing module.

In particular, the receiving module 203 may be embodied as an input interface in the screen. The user could input warning contents by clicking the input interface in the touch screen, and the second receiving sub-module can receive the warning contents input by the user via the touch screen.

In another preferred one of the embodiments of the present disclosure, the road warning device has intelligent terminal equipment connectable thereto and the receiving module 203 may further include a following sub-module:
a third receiving sub-module, configured to receive warning contents from the intelligent terminal equipment and transmit the warning contents to the displaying module and the data processing module.

In particular, the intelligent terminal equipment could include intelligent electronic equipment such as mobile phone, personal computer (PC) and tablet computer. The intelligent terminal equipment may be connectable to the road warning device in a wired or wireless manner. The user may edit the warning contents in the intelligent terminal equipment and then transmit them to the road warning device in a wired or wireless manner such that the warning contents can be received by the third receiving sub-module of the road warning device.

For example, the user could edit the warning contents on the mobile phone which is connected to the road warning device via WiFi or by scanning QR code; and then the user could transmit the edited warning contents to the road warning device.

As another example, the user can monitor the road condition in a computer room; when monitoring that a road has problems, the user can edit warning contents on a computer in the computer room such that the computer in the computer room can be connected to the road warning device in a wired or wireless manner; and then the user can transmit the edited warning contents on the computer in the computer room to the road warning device.

It should be explained, in the embodiment of the present disclosure, the intelligent terminal equipment could be placed in vicinity of the road warning device. For example, the mobile phone may be connectable to the road warning device via a data cable or by scanning QR code. Alternatively, a distance between the intelligent terminal equipment and the road warning device may be greater than a threshold; in this case, the intelligent terminal equipment is remote terminal equipment. For example, the user may connect the computer in the computer room to the road warning device. The distance between the intelligent terminal equipment and the road warning device is not restricted in the embodiments of the present disclosure as long as they could become connected.

After receiving the warning contents, the receiving module 203 can transmit the warning contents to the displaying module 205 and the data processing module 206.

The positioning module 204 is configured to acquire position information of the screen and transmit the position information to the data processing module 206;

In an embodied implementation, the positioning module 204 may include but not be limited to GPS (Global Positioning System), GNSS (Global Navigation Satellite System) and BDS (BeiDou Navigation Satellite System).

The positioning module 204 is able to real-time acquire the position information of the screen and transmit the position information to the data processing module 206.

The displaying module 205 is configured to display the warning contents on the screen.

In the application of the embodiment of the present disclosure, the displaying module 205 may receive the warning contents from the receiving module 203 and display the warning contents through the screen to play an external warning role.

The contents displayed on the screen by the displaying module 205 may be dependent on contents transmitted by the receiving module 203.

The data processing module 206 is configured to organize the warning contents and the position information as warning information and transmit the warning information to the transmitting module 207.

In practice, the data processing module 206 may include a microprocessor (or a microprocessor chip) supporting V2X communication and peripheral circuits. Herein, V2X (Vehicle to X) is key technology in an intelligent transportation system, which is able to come into communication between vehicles, between vehicles and base stations, and between base stations to obtain a series of traffic information such as real-time traffic condition, road information and pedestrian information, thereby improving driving safety, reducing congestion, improving transportation efficiency and providing vehicle entertainment information.

After receiving the warning contents from the receiving module 203 and the position information from the positioning module 204, the data processing module 206 can integrate the warning contents and the position information into warning information and transmit the warning information to the transmitting module 207.

In preferred one of the embodiments of the present disclosure, the data processing module 206 may include following sub-modules:
a splicing sub-module, configured to splice the warning contents and the position information; and
a packaging sub-module, configured to package the spliced warning contents and position information according to V2X protocol stack to generate the warning information.

In particular, the splicing sub-module may splice the received warning contents and position information and transmit a spliced result to the packaging sub-module, and the packaging sub-module may further package the spliced result into a format required by the V2X protocol stack to obtain the warning information.

The transmitting module 207 is configured to transmit the warning information to the objective vehicles within a predefined distance range.

In the embodiment of the present disclosure, the transmitting module 207 may at least include a RF (Radio Frequency) transmitting chip and a transmitting antenna supporting V2X communication.

In preferred one of the embodiments of the present disclosure, the transmitting module 207 may include a following sub-module:
a wireless transmitting sub-module, configured to periodically emit the warning information in a form of radio waves to the objective vehicles within the predefined distance range.

In the application of the embodiment of the present disclosure, the objective vehicles may include vehicles supporting V2X communication. In an implementation, the vehicles may be provided with V2X OBU (On Board Unit) to support the V2X communication.

After receiving the warning information from the data processing module 206, the transmitting module 207 can periodically emit the warning information to the outside in a form of radio waves in accordance with V2X technology rules, such that the objective vehicles within a predefined distance range can receive and display the warning information. Thus drivers can be early warned such that they have enough time to take actions and measures.

It should be explained that the predefined distance range may be a radio-frequency region of radio waves. In an embodied implementation, the predefined distance range according the embodiments of the present disclosure could be a wireless communication range of up to 1000m in open environment and up to 300m in urban intensive environment.

The transmitting module 207 according the embodiment of the present disclosure can support the V2X communication and support a wireless communication range of up to 1000m in open environment and up to 300m in urban intensive environment. In addition, signals transmitted by the transmitting module 207 are not be influenced by weather and blind angle, such that the objective vehicles can receive the warning information prior to the predefined distance range of the road warning device (for example, 1000m), thereby perfectly completing a early-warning function to the driver of the objective vehicle. Therefore, the driver may have enough time to take actions and measures to reduce occurrence of traffic accidents. With the embodiment of the present disclosure, especially in the case that the warning board easily topples over, the visibility is degraded in rain or snow or slight is shielded by vehicles ahead, it is possible to provide early warning to reduce occurrence of traffic accidents.

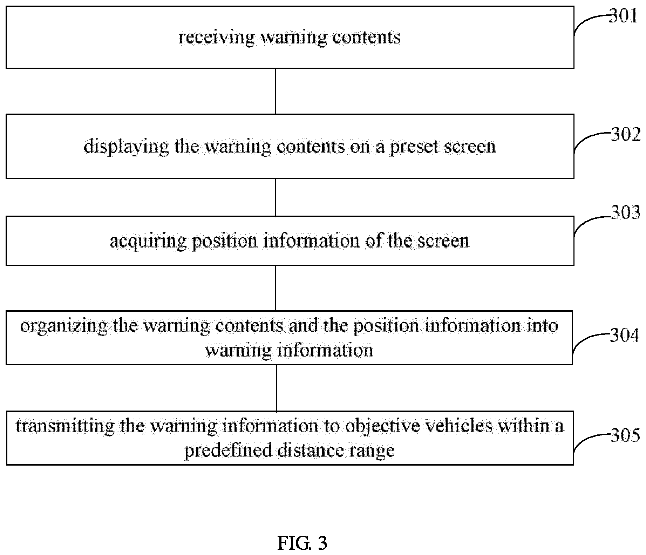

With reference to FIG. 3, it shows a flow chart showing an example of a road warning method according to an embodiment of the present disclosure. The method may particularly include steps of:
Step 301, receiving warning contents;
Step 302, displaying the warning contents on a preset screen;
Step 303, acquiring position information of the screen;
Step 304, organizing the warning contents and the position information into warning information; and
Step 305, transmitting the warning information to objective vehicles within a predefined distance range, wherein the objective vehicles include vehicles supporting vehicle-to-infrastructural facilities (V2X, Vehicle to X) communication.

In preferred one of the embodiments of the present disclosure, Step 304 may further include following sub-steps:
Sub-Step S11, splicing the warning contents and the position information; and
Sub-Step S12, packaging the spliced warning contents and position information according to the V2X protocol stack to generate the warning information.

In preferred one of the embodiments of the present disclosure, Step 305 may further include a following sub-step:
periodically emitting the warning information in a form of radio waves to the objective vehicles within the predefined distance range.

In preferred one of the embodiments of the present disclosure, Step 301 may further include a following sub-step:
receiving the warning contents input by a user via input equipment.

Herein, the input equipment may be keyboard, mouse and the like.

In another preferred one of the embodiments of the present disclosure, the screen may be a touch screen, and Step 301 may further include a following sub-step:
receiving the warning contents input by a user via a touch screen.

In another preferred one of the embodiments of the present disclosure, Step 301 may further include a following sub-step:
receiving the warning contents transmitted by intelligent terminal equipment.

Since the method embodiment in relation to FIG 3 is substantially similar to the device embodiment as described, the description thereof is relatively simple. For the method embodiment, reference can be made to related parts of the device embodiment.

The above embodiment of client or server is described merely for a schematic purpose, wherein the units explained as individual members may or may not be physically separated, the members shown as units may or may not be physical units and they can be placed at a position or also can be distributed to network units. As necessary in practice, some or all of the modules can be selected to complete the objectives of the schemes of the embodiments. An ordinary person skilled in the art may understand and implement the embodiments without contributing creative labor.

Each of devices according to the embodiments of the disclosure can be implemented by hardware, or implemented by software modules operating on one or more processors, or implemented by the combination thereof. A person skilled in the art should understand that, in practice, a microprocessor or a digital signal processor (DSP) may be used to realize some or all of the functions of some or all of the modules in the device according to the embodiments of the disclosure. The disclosure may further be implemented as device program (for example, computer program and computer program product) for executing some or all of the methods as described herein. Such program for implementing the disclosure may be stored in the computer readable medium, or have a form of one or more signals. Such a signal may be downloaded from the internet websites, or be provided in carrier, or be provided in other manners.

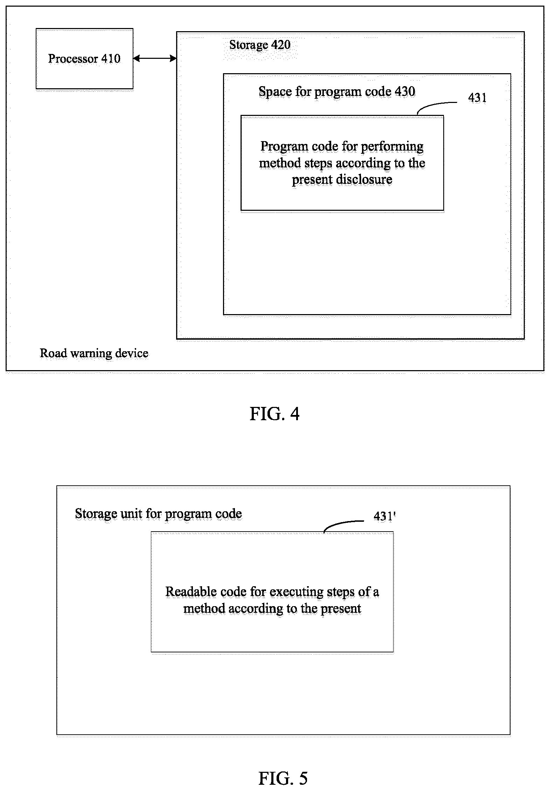

For example, FIG. 4 illustrates a block diagram of a road warning device for executing the method according the disclosure. Traditionally, the road warning device includes a processor 410 and a computer program product or a computer readable medium in form of a memory 420. The memory 420 could be electronic memories such as flash memory, EEPROM (Electrically Erasable Programmable Read - Only Memory), EPROM, hard disk or ROM. The memory 420 has a memory space 430 for executing program codes 431 of any steps in the above methods. For example, the memory space 430 for program codes may include respective program codes 431 for implementing the respective steps in the method as mentioned above. These program codes may be read from and/or be written into one or more computer program products. These computer program products include program code carriers such as hard disk, compact disk (CD), memory card or floppy disk. These computer program products are usually the portable or stable memory cells as shown in reference FIG. ****. The memory cells may be provided with memory sections, memory spaces, etc., similar to the memory 420 of the server as shown in FIG. 4. The program codes may be compressed for example in an appropriate form. Usually, the memory cell includes computer readable codes 431' which can be read for example by processors 410. When these codes are operated on the server, the server may execute respective steps in the method as described above.

The "an embodiment", "embodiments" or "one or more embodiments" mentioned in the disclosure means that the specific features, structures or performances described in combination with the embodiment(s) would be included in at least one embodiment of the disclosure. Moreover, it should be noted that, the wording "in an embodiment" herein may not necessarily refer to the same embodiment.

Many details are discussed in the specification provided herein. However, it should be understood that the embodiments of the disclosure can be implemented without these specific details. In some examples, the well-known methods, structures and technologies are not shown in detail so as to avoid an unclear understanding of the description.

It should be noted that the above-described embodiments are intended to illustrate but not to limit the disclosure, and alternative embodiments can be devised by the person skilled in the art without departing from the scope of claims as appended. In the claims, any reference symbols between brackets form no limit of the claims. The wording "include" does not exclude the presence of elements or steps not listed in a claim. The wording "a" or "an" in front of an element does not exclude the presence of a plurality of such elements. The disclosure may be realized by means of hardware comprising a number of different components and by means of a suitably programmed computer. In the unit claim listing a plurality of devices, some of these devices may be embodied in the same hardware. The wordings "first", "second", and "third", etc. do not denote any order. These wordings can be interpreted as a name.

Also, it should be noticed that the language used in the present specification is chosen for the purpose of readability and teaching, rather than explaining or defining the subject matter of the disclosure. Therefore, it is obvious for an ordinary skilled person in the art that modifications and variations could be made without departing from the scope and spirit of the claims as appended. For the scope of the disclosure, the publication of the inventive disclosure is illustrative rather than restrictive, and the scope of the disclosure is defined by the appended claims.

In the end, it should be explained that aforesaid embodiments are provided for the purpose of illustrating not limiting the technical schemes of the present disclosure. Although the present invention has been described in detail with reference to the embodiments, it should be understood that modifications or equivalent substitutions can be made to the technical schemes or some of technical features therein as disclosed in the embodiments by those skilled in the art; the modifications or substitutions will not bring the essence of the respective technical schemes to depart from spirit and scope of the technical schemes of the inventive embodiments.

## Claims

1. A road warning device, **characterized in that**, the device comprises:
a screen;
a receiving module, configured to receive warning contents and transmit the warning contents to a displaying module and a data processing module;
a positioning module, configured to acquire position information of the screen and transmit the position information to the data processing module;
a displaying module, configured to display the warning contents on the screen;
a data processing module, configured to organize the warning contents and the position information into warning information and transmit the warning information to a transmitting module; and
the transmitting module, configured to transmit the warning information to objective vehicles within a predefined distance range, wherein the objective vehicles comprise vehicles supporting V2X communication.

2. The device according to claim 1, **characterized in that**, the device further comprises:
a supporting device, configured to support the screen.

3. The device according to claim 2, **characterized in that**, the receiving module, the positioning module, the displaying module, the data processing module and the transmitting module are built in the supporting device.

4. The device according to claim 1 or 2 or 3, **characterized in that**, the device further comprises:
a power supply module, configured to supply electric power to the road warning device.

5. The device according to claim 1, **characterized in that**, the device further comprises input equipment which is connectable to the screen, and the receiving module comprises:
a first receiving sub-module, configured to receive warning contents input by the user through the input equipment and transmit the warning contents to the displaying module and the data processing module.

6. The device according to claim 1, **characterized in that**, the screen is a touch screen, and the receiving module comprises:
a second receiving sub-module, configured to receive warning contents input by the user via the touch screen and transmit the warning contents to the displaying module and the data processing module.

7. The device according to claim 1, **characterized in that**, the road warning device has intelligent terminal equipment connectable thereto, and the receiving module comprises:
a third receiving sub-module, configured to receive warning contents from the intelligent terminal equipment and transmit the warning contents to the displaying module and the data processing module.

8. The device according to claim 1, **characterized in that**, the data processing module comprises:
a splicing sub-module, configured to splice the warning contents and the position information; and
a packaging sub-module, configured to package the spliced warning contents and position information according to V2X protocol stack to generate the warning information.

9. The device according to claim 1 or 8, **characterized in that**, the transmitting module comprises:
a wireless transmitting sub-module, configured to periodically emit the warning information in a form of radio waves to the objective vehicles within the predefined distance range.

10. A road warning method, **characterized in that**, the method comprises steps of:
receiving warning contents;
displaying the warning contents on a preset screen;
acquiring position information of the screen;
organizing the warning contents and the position information into warning information; and
transmitting the warning information to objective vehicles within a predefined distance range, wherein the objective vehicles comprise vehicles supporting V2X communication.

11. The method according to claim 10, **characterized in that**, the step of organizing the warning contents and the position information into warning information comprises:
splicing the warning contents and the position information; and
packaging the spliced warning contents and position information according to the V2X protocol stack to generate the warning information.

12. The method according to claim 10 or 11, **characterized in that**, the step of transmitting the warning information to objective vehicles within a predefined distance range comprises:
periodically emitting the warning information in a form of radio waves to the objective vehicles within the predefined distance range.

13. A computer program, comprising a computer readable code, wherein the computer readable code causes a road warning device to execute the road warning method according to any of claims 10-12 when operating on the road warning device.

14. A computer readable medium, in which the computer readable program according to claim 13 is stored.
